# EUROPEAN PATENT SPECIFICATION

(11) **EP 3 755 028 B1**
(45) Date of publication and mention of the grant of the patent: **22.06.2022**
(21) Application number: 18913851.4
(22) Date of filing: 04.04.2018
(51) Int. Cl.: H04W 24/00, H04L 27/26, H04L 5/00

(54) **INFORMATION DETERMINATION AND CONFIGURATION OF CSI-RS RESOURCES WITH INDICATION OF USAGE FOR TRACKING**
INFORMATIONSERMITTLUNG UND -KONFIGURATION VON CSI-RS RESSOURCEN MIT BEZEICHNUNG ZUR VERWENDUNG FÜR VERFOLGUNG
DÉTERMINATION ET CONFIGURATION D'INFORMATIONS DE RESSOURCES CSI-RS AVEC UN INDICATION D'USAGE POUR TRAÇAGE

(43) Date of publication of application: 23.12.2020
(60) Divisional application: 22168561.3
(73) Proprietor: GUANGDONG OPPO MOBILE TELECOMMUNICATIONS CORP., LTD., Wusha, Chang'an Dongguan, Guangdong 523860 (CN)
(72) Inventor: SHI, Zhihua, Dongguan, Guangdong 523860 (CN); CHEN, Wenhong, Dongguan, Guangdong 523860 (CN); ZHANG, Zhi, Dongguan, Guangdong 523860 (CN)
(74) Representative: RGTH
(86) International application number: PCT/CN2018/081845
(87) International publication number: WO 2019/191924

(56) References cited:
- WO-A1-2018/031807
- CN-A- 104 956 611
- CN-A- 105 471 559
- US-A1- 2018 083 680
- VIVO: "Remaining issues on QCL", 3GPP DRAFT; R1-1801529_REMAINING ISSUES ON QCL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 15 February 2018 (2018-02-15), XP051396781, Retrieved from the Internet: URL:http://www.3gpp.org/ftp/tsg%5Fran/WG1% 5FRL1/TSGR1%5F92/Docs/ [retrieved on 2018-02-15]
- NOKIA ET AL: "Further proposals on QCL", 3GPP DRAFT; R1-1803414-ATHENS-FURTHER PROPOSALS ON QCL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 1 March 2018 (2018-03-01), XP051398636, Retrieved from the Internet: URL:http://www.3gpp.org/ftp/tsg%5Fran/WG1% 5FRL1/TSGR1%5F92/Docs/ [retrieved on 2018-03-01]
- NOKIA: "Summary of QCL", 3GPP TSG RAN WG1#92, R1-1803328,, vol. 1-5, no. 4, 2 March 2018 (2018-03-02) , pages 10-12, XP051398516,
- "3GPP TS 38.214 V15.0.0", 3rd Generation Partnership Project; Technical Specification Group Radio Access Network; NR; Physical layer procedures for data (Release 15, 3 January 2018 (2018-01-03), pages 1-71, XP051392264,

## Description

### TECHNICAL FIELD

Embodiments of the disclosure relate to the field of wireless communications, and more particularly to information determination and configuration.

### BACKGROUND

In a Long Term Evolution (LTE) system, Cell-specific Reference Signals (CRSs) exist within a system bandwidth. Thus, the CRSs are with a relatively large bandwidth and a relatively large time domain density, such that a terminal can use a CRS (and/or a synchronization signal) to obtain a better time/frequency synchronization performance (e.g. timing/frequency tracking, or timing/frequency synchronization).

In a New Radio (NR) system, a Synchronization Signal Block (SSB) (which includes a Primary Synchronization Signal (PSS), a Secondary Synchronization Signal (SSS) and a Physical Broadcast Channel (PBCH)) only occupies a part of the bandwidth, and its time domain density is lower than the time domain density of the CRS in the LTE system, therefore the SSB can be used for coarse synchronization. However, in cases where time-frequency synchronization with higher precision is required, the synchronization requirement can be met. Furthermore, there are no CRSs in the NR system, a new signal synchronization reference signal (Tracking Reference Signal (TRS)) is thus proposed. In the final design, the TRS is implemented in the following manner (where the official name of TRS in the protocol is CSI-RS for tracking).
(1) The TRS is implemented as a set of periodic CSI-RS resources, which are configured with a parameter TRS-Info.
(2) In addition, there are some other configuration requirements.

A periodic CSI-RS resource is currently configured with corresponding Quasi Co-Located (QCL) information, which specifically points to a TCI-State. In a CSI-RS resource set, currently, QCL information of different CSI-RS resources may be configured randomly. It will result in a loss of performance, for example, different receiving beams are used to receive the different CSI-RS resources, then corresponding channels for transmitting these different CSI-RS resources will have different statistical characteristics, thus the precision of the timing and frequency tracking/synchronization will be affected.

D1 (NOKIA: "Summary of QCL", 3GPP TSG RAN WG1 #92, R1 -1803328, vol. 1-5, no. 4, 2 March 2018 (2018-03-02), pages 10-12) discloses that, if a UE is configured with the higher-layer parameter *CSI-RS-ResourceRep* set to 'ON', the UE may assume that the CSI-RS resources, within the resource set are transmitted with the same downlink spatial domain transmission filter QCL-ed w.r.t spatial Rx parameters, where the CSI-RS resources in the resource set are transmitted in different OFDM symbols.

D2 (VIVO: "Remaining issues on QCL", 3GPP DRAFT; R1-1801529, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, RAN WG1, Athens, Greece; 20180226 - 20180302 15 February 2018 (2018-02-15)) discloses that the UE may assume that the antenna ports of one DM-RS port group of PDSCH of a serving cell are quasi co-located with the RS(s) in the RS set with respect to the QCL type parameter(s) given by the indicated TCI state.

D3 (NOKIA ET AL: "Further proposals on QCL", 3GPP DRAFT; R1-1803414, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, RAN WG1, Athens, Greece; 20180226 - 20180302 1 March 2018 (2018-03-01)) discloses that the periodic CSI-RS resources in the CSI-RS resource set with higher layer parameter *TRS-INFO* set as 'ON' have the same periodicity, bandwidth and subcarrier location.

D4 (US 2018/083680 A1 (GUO LI [US] ET AL) 22 March 2018 (2018-03-22)) discloses a method of a user equipment (UE) for a beam management in a wireless communication system. The method comprises receiving, from a base station (BS), configuration information including information of receive (Rx) beam identifications (IDs) associated with Rx beams, receiving, from the BS, reference signals for determining the Rx beams, wherein the Rx beams include different Rx beam IDs, respectively, measuring, based on the Rx beams, a beam reference signal (BRS) and a channel state information-reference signal (CSI-RS) received from the BS, and performing, based on the configuration information, an Rx beam cycling operation for the Rx beams to receive downlink channels.

### SUMMARY

In order to solve the aforementioned technical problems, the embodiments of the invention provide methods and apparatuses for information determination and configuration, which are set out in the claims.

There is provided a method for information determination, including: receiving, by a terminal device, first configuration information from a network device. The first configuration information is used for configuring a set of Channel State Information-Reference Signal (CSI-RS) resources and configuring a first indication parameter corresponding to the set of CSI-RS resources, where respective CSI-RS resources of the set are quasi co-located with respect to a first Quasi Co-Location (QCL) parameter the first indication parameter is configured to indicate a usage of the set of CSI-RS resources, the usage indicates CSI-RS for tracking, and the first indication parameter is a parameter *Tracking Reference Signal-Info, TRS-Info.*

According to an embodiment, the first QCL parameter is a spatial QCL parameter.

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

There is provided an apparatus for information determination, including: a receiving unit, configured to receive first configuration information from a network device, where the first configuration information is used for configuring a set of Channel State Information-Reference Signal (CSI-RS) resources and configuring a first indication parameter corresponding to the set of CSI-RS resources, where respective CSI-RS resources of the set are quasi co-located with respect to a first Quasi Co-Location (QCL) parameter, the first indication parameter is configured to indicate a usage of the set of CSI-RS resources, the usage indicates CSI-RS for tracking, and the first indication parameter is a parameter *Tracking Reference Signal-Info, TRS-Info.*

According to an embodiment, the first QCL parameter is a spatial QCL parameter.

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

There is provided an apparatus for information configuration, including: a transmitting unit, configured to transmit first configuration information to a terminal device, the first configuration information being used for configuring a set of Channel State Information-Reference Signal (CSI-RS) resources and configuring a first indication parameter corresponding to the set of CSI-RS resources, where respective CSI-RS resources of the set are quasi co-located with respect to a first Quasi Co-Location (QCL) parameter, the first indication parameter is configured to indicate a usage of the set of CSI-RS resources, the usage indicates CSI-RS for tracking, and the first indication parameter is a parameter *Tracking Reference Signal-Info, TRS-Info.*

According to an embodiment, the first QCL parameter is a spatial QCL parameter.

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

There is provided another method for information configuration, including: transmitting, by a network device, first configuration information to a terminal device. The first configuration information is used for configuring a set of Channel State Information-Reference Signal (CSI-RS) resources and configuring a first indication parameter corresponding to the set of CSI-RS resources, where respective CSI-RS resources of the set are quasi co-located with respect to a first Quasi Co-Location (QCL) parameter the first indication parameter is configured to indicate a usage of the set of CSI-RS resources, the usage indicates CSI-RS for tracking, and the first indication parameter is a parameter *Tracking Reference Signal-Info, TRS-Info.*

According to an embodiment, the first QCL parameter is a spatial QCL parameter.

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

According to embodiments of the disclosure, a terminal device receives first configuration information from a network device, where the first configuration information is used for configuring a set of Channel State Information-Reference Signal (CSI-RS) resources and configuring a first indication parameter corresponding to the set of CSI-RS resources, where respective CSI-RS resources of the set are quasi co-located with respect to a first Quasi Co-Location (QCL) parameter; the terminal device determines a first signal based on the first configuration information, the first indication parameter is configured to indicate a usage of the set of CSI-RS resources, the usage indicates CSI-RS for tracking, and the first indication parameter is a parameter *Tracking Reference Signal-Info, TRS-Info,* and then utilizes the first signal to perform timing and/or frequency tracking/synchronization. With the technical solutions of the embodiments of the disclosure, the timing/frequency tracking (sometimes also termed as synchronization) performance can be improved, thereby the system's performance can also be improved.

### BRIEF DESCRIPTION OF THE DRAWINGS

Drawings described herein are used to provide a further understanding of the disclosure and form a part of the disclosure. The schematic embodiments of the disclosure and their descriptions are used to explain the disclosure and not as any inappropriate limitation on the disclosure. The drawings are shown as following.
FIG. 1 is a schematic flowchart of a method for information determination according to an embodiment of the disclosure.
FIG. 2 is a schematic flowchart of a method for information configuration according to an embodiment of the disclosure.
FIG. 3 is a schematic diagram of the structural composition of an apparatus for information determination according to an embodiment of the disclosure.
FIG. 4 is a schematic diagram of the structural composition of an apparatus for information configuration according to an embodiment of the disclosure.
FIG. 5 is a schematic diagram of the structural composition of a computer device according to an embodiment of the disclosure.

### DETAILED DESCRIPTION

In order to facilitate understanding of the technical solutions of the embodiments of the disclosure, the related technologies involved in the embodiments of the disclosure will be described in the following.

### (1) TCI-state

One TCI state may be configured with one or two RS information; each RS information corresponds to a different type of QCL parameter. For instance, two RSs form a set of QCL information, where RS1 corresponds to QCL-TypeA, and RS2 corresponds to QCL-TypeD. Two pieces of RS information may indicate a same RS or different RSs.

### (1) QCL Type

The QCL supported in the current protocol is assumed to correspond to parameters as follows (it can be one item, or a combination of several items):
- 'QCL-TypeA': {Doppler shift, Doppler spread, average delay, delay spread};
- 'QCL-TypeB': {Doppler shift, Doppler spread};
- 'QCL-TypeC': {average delay, Doppler shift1;
- 'QCL-TypeD': {Spatial Rx parameter}.

Herein, 'QCL-TypeD': {Spatial Rx parameter} is a spatial QCL parameter.

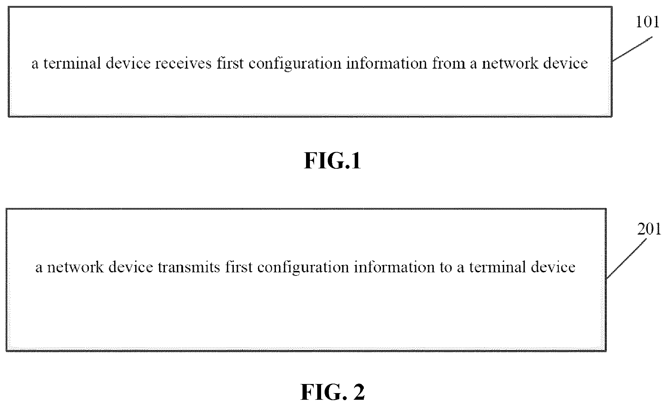

FIG. 1 is a schematic flowchart of a method for information determination according to an embodiment of the disclosure. As shown in FIG. 1, the method for information determination includes operation 101.

In operation 101, a terminal device receives first configuration information from a network device, the first configuration information being used for configuring a set of Channel State Information-Reference Signal (CSI-RS) resources, where respective CSI-RS resources of the set are quasi co-located with respect to a first Quasi Co-Location (QCL) parameter.

According to embodiments of the disclosure, a network configures a set of CSI-RS resources, which can be periodic or non-periodic.

According to an embodiment, the first configuration information is further used for configuring a first indication parameter corresponding to the set of CSI-RS resources, the first indication parameter being configured to indicate a usage of the set of CSI-RS resources. In a specific implementation, the first indication parameter is a parameter *Tracking Reference Signal-Info (TRS-Info).*

According to embodiments of the disclosure, the first QCL parameter is a spatial QCL parameter, i.e., 'QCL-TypeD': {Spatial Rx parameter}.

According to embodiments of the disclosure, respective CSI-RS resources of the set are quasi co-located with respect to a first Quasi Co-Location (QCL) parameter. Specifically, the quasi-co-location with respect to a spatial QCL parameter can be achieved in one or more of ways 1 to 3.

In the way 1, first reference signals indicated by QCL information corresponding to respective CSI-RS resources of the set are quasi co-located with respect to the first QCL parameter, the first reference signals being reference signals corresponding to the first QCL parameter.

For example, a CSI-RS resource 1 (RS1) and a CSI-RS resource 2 (RS2) correspond to a signal X and a signal Y respectively, where the signal X and the RS1 are quasi co-located with respect to the spatial QCL parameter, and the signal Y and the RS2 are also quasi co-located with respect to the spatial QCL parameter. Then, if the RS1 and the RS2 are quasi co-located with respect to the spatial QCL parameter, the signal X and the signal Y will, thereby, be quasi co-located with respect to the spatial QCL parameter.

In the way 2, QCL information corresponding to each of the set of CSI-RS resources indicates a same first reference signal, the first reference signal being a reference signal corresponding to the first QCL parameter.

For example, a CSI-RS resource1 (RS1) and a CSI-RS resource2 (RS2) correspond to a signal X and a signal Y respectively, where the signal X and the RS1 are quasi co-located with respect to the spatial QCL parameter, and the signal Y and the RS2 are also quasi co-located with respect to the spatial QCL parameter. Then, the signal X and the signal Y are quasi co-located with respect to the spatial QCL parameter.

In the way 3, QCL information corresponding to each of the set of CSI-RS resources corresponds to a same Transmission Configuration Indicator State (TCI-State).

Herein, a same TCI-State is used for configuring the QCL information corresponding to each of the set of CSI-RS resources, thus respective CSI-RS resources of the set are quasi co-located with respect to the spatial QCL parameter.

According to embodiments of the disclosure, the terminal device determines a first signal based on the first configuration information, and utilizes the first signal to perform timing and/or frequency tracking/synchronization.

FIG. 2 is a schematic flowchart of a method for information configuration according to an embodiment of the disclosure. As shown in FIG. 2, the method for information configuration includes operation 201.

In operation 201, a network device transmits first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to embodiments of the disclosure, a network configures a set of CSI-RS resources, which can be periodic or non-periodic.

According to an embodiment, the first configuration information is further used for configuring a first indication parameter corresponding to the set of CSI-RS resources, the first indication parameter being configured to indicate a usage of the set of CSI-RS resources. In a specific implementation, the first indication parameter is a parameter *Tracking Reference Signal-Info (TRS-Info).*

According to embodiments of the disclosure, the first QCL parameter is a spatial QCL parameter, i.e., 'QCL-TypeD': {Spatial Rx parameter}.

According to embodiments of the disclosure, respective CSI-RS resources of the set are quasi co-located with respect to a first Quasi Co-Location (QCL) parameter. Specifically, the quasi-co-location with respect to a spatial QCL parameter can be achieved in one or more of ways 1 to 3.

In the way 1, first reference signals indicated by QCL information corresponding to respective CSI-RS resources of the set are quasi co-located with respect to the first QCL parameter, the first reference signals being reference signals corresponding to the first QCL parameter.

For example, a CSI-RS resource 1 (RS1) and a CSI-RS resource 2 (RS2) correspond to a signal X and a signal Y respectively, where the signal X and the RS1 are quasi co-located with respect to the spatial QCL parameter and the signal Y and the RS2 are also quasi co-located with respect to the spatial QCL parameter. Then, if the RS1 and the RS2 are quasi co-located with respect to the spatial QCL parameter, the signal X and the signal Y will, thereby, be quasi co-located with respect to the spatial QCL parameter.

In the way 2, QCL information corresponding to each of the set of CSI-RS resources indicates a same first reference signal, the first reference signal being a reference signal corresponding to the first QCL parameter.

For example, a CSI-RS resource 1 (RS1) and a CSI-RS resource 2 (RS2) correspond to a signal X and a signal Y respectively, where the signal X and the RS 1 are quasi co-located with respect to the spatial QCL parameter and the signal Y and the RS2 are also quasi co-located with respect to the spatial QCL parameter. Then, the signal X and the signal Y are quasi co-located with respect to the spatial QCL parameter.

In the way 3, QCL information corresponding to each of the set of CSI-RS resources corresponds to a same Transmission Configuration Indicator State (TCI-State).

Herein, a same TCI-State is used for configuring the QCL information corresponding to each of the set of CSI-RS resources, thus respective CSI-RS resources of the set are quasi co-located with respect to the spatial QCL parameter.

Herein, the terminal device determines a first signal based on the first configuration information, and utilizes the first signal to perform timing and/or frequency tracking/synchronization.

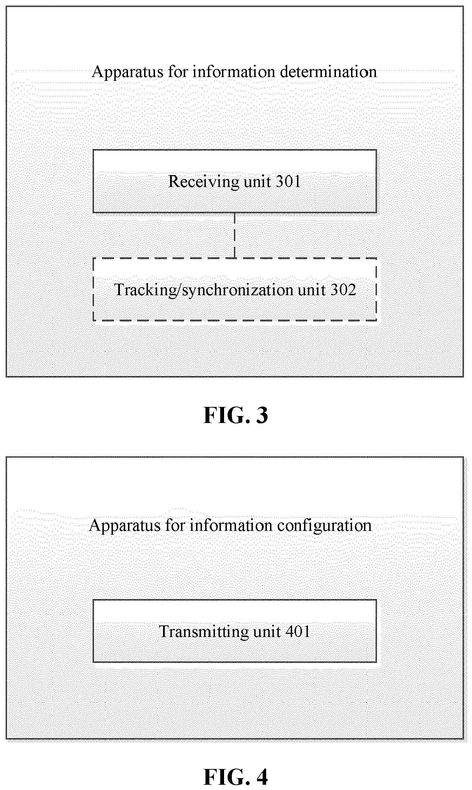

FIG. 3 is a schematic diagram of the structural composition of an apparatus for information determination according to an embodiment of the disclosure. As shown in FIG. 3, the apparatus for information determination includes a receiving unit 301.

The receiving unit 301 is configured to receive first configuration information from a network device, where the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the apparatus further includes a tracking/synchronization unit 302, which is configured to: determine a first signal based on the first configuration information, and utilize the first signal to perform timing and/or frequency tracking/ synchronization.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

Those skilled in the art should appreciate that the function implemented by each unit in the apparatus for information determination shown in FIG. 3 can be understood by referring to the related description of the foregoing method for information determination. Moreover, the function of each unit in the apparatus for information determination shown in FIG. 3 can be implemented by programs running on a processor, or by a specific logic circuit.

FIG. 4 is a schematic diagram of the structural composition of an apparatus for information configuration according to an embodiment of the disclosure. As shown in FIG. 4, the apparatus for information configuration includes a transmitting unit 401.

The transmitting unit 401 is configured to transmit first configuration information to a terminal device, the first configuration information being used for configuring a set of Channel State Information-Reference Signal (CSI-RS) resources, where respective CSI-RS resources of the set are quasi co-located with respect to a first Quasi Co-Location (QCL) parameter.

According to an embodiment, the first QCL parameter is a spatial QCL parameter.

According to an embodiment, the first configuration information is further used for configuring a first indication parameter corresponding to the set of CSI-RS resources, the first indication parameter being configured to indicate a usage of the set of CSI-RS resources.

According to an embodiment, the first indication parameter is a parameter *Tracking Reference Signal-Info (TRS-Info).*

According to an embodiment, first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State (TCI-State).

Those skilled in the art should appreciate that the function implemented by each unit in the apparatus for information configuration shown in FIG. 4 can be understood by referring to the related description of the foregoing method for information configuration. Moreover, the function of each unit in the apparatus for information configuration shown in FIG. 4 can be implemented by programs running on a processor, or by a specific logic circuit.

If the above-mentioned apparatus for information determination or information configuration device in the embodiments of the disclosure is implemented in the form of a software function module, and sold or used as an independent product, it may also be stored in a computer-readable storage medium. Based on this kind of understanding, the technical solutions of the embodiments of the disclosure can be embodied in the form of software products in essence or in the part contributing to the prior art. The computer software product is stored in a storage medium, and includes several instructions to enable a computer device (which may be a personal computer, server, or network device, etc.) to perform all or part of the methods described in the embodiments of the disclosure. The aforementioned storage medium includes various media that can store program codes, such as a U disk, a mobile hard disk, a Read-Only Memory (ROM), a magnetic disk, or an optical disk. As such, the embodiments of the disclosure will not be limited to any specific combination of hardware and software.

Accordingly, the embodiments of the disclosure further provide a computer storage medium, which has stored thereon computer executable instructions that, when executed by a processor, cause operations of the aforementioned method for information determination and configuration to be performed.

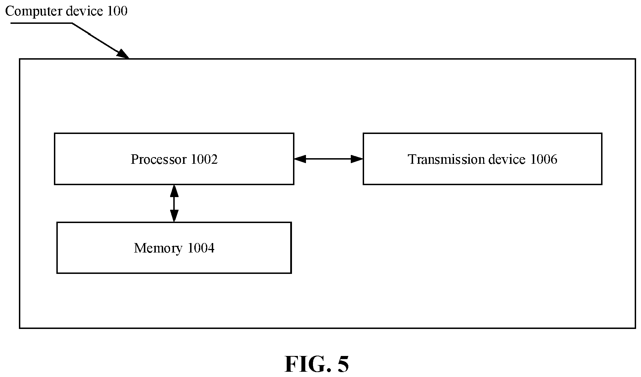

FIG. 5 is a schematic diagram of the structural composition of a computer device according to an embodiment of the disclosure, where the computer device is a terminal device, or a network device. As shown in FIG. 5, a computer device 100 includes one or more processor 1002 (only one shown in the figure), the processor includes but not limited to a processing device such as a Micro Controller Unit (MCU) or a Field Programmable Gate Array (FPGA). In addition, the computer device 100 further includes a memory 1004 for storing data, and a transmission device 1006 for communication function. Those of ordinary skill in the art should understand that the structure shown in FIG. 5 is only schematic, which does not limit the structure of the above electronic device. For instance, a computer device 100 can also include more or fewer components than that shown in FIG. 5, or have a different configuration from that shown in FIG. 5.

The memory 1004 is used to store software programs and modules of the application software, such as program instructions/modules corresponding to the methods in the embodiments of the disclosure, and the processor 1002 runs the software programs and modules stored in the memory 1004, such that various functional applications and data processing can be performed, i.e., the above methods are implemented. The memory 1004 includes a high-speed random access memory, and also includes a non-volatile memory, such as one or more magnetic storage devices, flash memory, or other non-volatile solid-state memory. In some embodiments, the memory 1004 further includes memories remotely provided with respect to the processor 1002, and these remote memories is connected with the computer device 100 through a network. Examples of the above network include but are not limited to the Internet, intranet, local area network, mobile communication network, and combinations thereof.

The transmission device 1006 is used to receive or transmit data via a network. One specific embodiment of the above network includes a wireless network provided by the communications providers of the computer device 100. In an embodiment, the transmission device 1006 includes a Network Interface Controller (NIC), which can be connected with other network devices through a base station, thus to communicate with the Internet. In an embodiment, the transmission device 1006 is a Radio Frequency (RF) module, which is used for connecting wirelessly with the Internet for communication.

Embodiments not falling under the scope of the appended claims are to be considered merely as examples suitable for understanding the invention. For example, embodiments of FIG. 2 are not falling under the scope of the appended claims, and illustrated for as examples suitable for understanding the invention.

## Claims

1. A method for information determination, comprising:
receiving (101), by a terminal device, first configuration information from a network device, **characterized in that**, the first configuration information is used for configuring a set of Channel State Information-Reference Signal, CSI-RS, resources and configuring a first indication parameter corresponding to the set of CSI-RS resources, wherein respective CSI-RS resources of the set are quasi co-located with respect to a first Quasi Co-Location, QCL, parameter, the first indication parameter is configured to indicate a usage of the set of CSI-RS resources, the usage indicates CSI-RS for tracking, and the first indication parameter is a parameter *Tracking Reference Signal-Info, TRS-Info.*

2. The method of claim 1, wherein the first QCL parameter is a spatial QCL parameter.

3. The method of any one of claims 1 to 2,
wherein first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State, TCI-State.

4. An apparatus for information determination, the apparatus being associated with a terminal device and comprising:
a receiving unit (301), configured to receive first configuration information from a network device (100), **characterized in that**, the first configuration information is used for configuring a set of Channel State Information-Reference Signal, CSI-RS, resources and configuring a first indication parameter corresponding to the set of CSI-RS resources, wherein respective CSI-RS resources of the set are quasi co-located with respect to a first Quasi Co-Location, QCL, parameter, the first indication parameter is configured to indicate a usage of the set of CSI-RS resources, the usage indicates CSI-RS for tracking, and the first indication parameter is a parameter *Tracking Reference Signal-Info, TRS-Info.*

5. The apparatus of claim 4, wherein the first QCL parameter is a spatial QCL parameter.

6. The apparatus of any one of claims 4 to 5,
wherein first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State, TCI-State.

7. An apparatus for information configuration, the apparatus being associated with a network device and comprising:
a transmitting unit (401), configured to transmit first configuration information to a terminal device (100), **characterized in that**, the first configuration information is used for configuring a set of Channel State Information-Reference Signal, CSI-RS, resources and configuring a first indication parameter corresponding to the set of CSI-RS resources, wherein respective CSI-RS resources of the set are quasi co-located with respect to a first Quasi Co-Location, QCL, parameter, the first indication parameter is configured to indicate a usage of the set of CSI-RS resources, the usage indicates CSI-RS for tracking, and the first indication parameter is a parameter *Tracking Reference Signal-Info, TRS-Info.*

8. The apparatus of claim 7, wherein the first QCL parameter is a spatial QCL parameter.

9. The apparatus of any one of claims 7 to 8,
wherein first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State, TCI-State.

10. A method for information configuration, comprising:
transmitting, by a network device, first configuration information to a terminal device, **characterized in that**, the first configuration information is used for configuring a set of Channel State Information-Reference Signal, CSI-RS, resources and configuring a first indication parameter corresponding to the set of CSI-RS resources, wherein respective CSI-RS resources of the set are quasi co-located with respect to a first Quasi Co-Location, QCL, parameter, the first indication parameter is configured to indicate a usage of the set of CSI-RS resources, the usage indicates CSI-RS for tracking, and the first indication parameter is a parameter *Tracking Reference Signal-Info, TRS-Info.*

11. The method of claim 10, wherein the first QCL parameter is a spatial QCL parameter.

12. The method of one of claims 10 to 11,
wherein first reference signals indicated by QCL information corresponding to respective CSI-RS resources of the set are quasi co-located with respect to the first QCL parameter, the first reference signals being reference signals corresponding to the first QCL parameter; and/or,
QCL information corresponding to each of the set of CSI-RS resources indicates a same first reference signal, the first reference signal being a reference signal corresponding to the first QCL parameter; and/or,
QCL information corresponding to each of the set of CSI-RS resources corresponds to a same Transmission Configuration Indicator State, TCI-State.

## Patentansprüche

1. Verfahren zur Informationsbestimmung, umfassend:
Empfangen (101) erster Konfigurationsinformationen von einem Netzwerkgerät durch ein Endgerät, **dadurch gekennzeichnet, dass** die ersten Konfigurationsinformationen zum Konfigurieren eines Satzes von Kanalzustandsinformation-Referenzsignal-, CSI-RS-, Ressourcen und zum Konfigurieren eines ersten Angabeparameters, der dem Satz von CSI-RS-Ressourcen entspricht, verwendet werden, wobei die jeweiligen CSI-RS-Ressourcen des Satzes quasi die gleiche Position in Bezug auf einen ersten Parameter der quasi gleichen Position, QCL, aufweisen, der erste Angabeparameter dafür konfiguriert ist, eine Auslastung des ersten Satzes von CSI-RS-Ressourcen anzugeben, die Auslastung CSI-RS zum Nachverfolgen angibt und der erste Angabeparameter ein Parameter "Nachverfolgungsreferenzsignal-Info", TRS-Info, ist.

2. Verfahren nach Anspruch 1, wobei der erste QCL-Parameter ein räumlicher QCL-Parameter ist.

3. Verfahren nach einem der Ansprüche 1 bis 2,
wobei erste Referenzsignale, die durch QCL-Informationen angegeben werden, die jeweiligen CSI-RS-Ressourcen des Satzes entsprechen, quasi die gleiche Position in Bezug auf den ersten QCL-Parameter aufweisen, wobei die ersten Referenzsignale Referenzsignale sind, die dem ersten QCL-Parameter entsprechen, und/oder
QCL-Informationen, die jeder Ressource des Satzes von CSI-RS-Ressourcen entsprechen, ein gleiches erstes Referenzsignal angeben, wobei das erste Referenzsignal ein Referenzsignal ist, das dem ersten QCL-Parameter entspricht, und/oder
QCL-Informationen, die jeder Ressource des Satzes von CSI-RS-Ressourcen entsprechen, einem gleichen Zustand des Übertragungskonfigurationsindikators, TCI-Zustand, entsprechen.

4. Vorrichtung zur Informationsbestimmung, wobei die Vorrichtung mit einem Endgerät assoziiert ist und Folgendes umfasst:
eine Empfangseinheit (301), die dafür konfiguriert ist, erste Konfigurationsinformationen von einem Netzwerkgerät (100) zu empfangen, **dadurch gekennzeichnet, dass** die ersten Konfigurationsinformationen zum Konfigurieren eines Satzes von Kanalzustandsinformation-Referenzsignal-, CSI-RS-, Ressourcen und zum Konfigurieren eines ersten Angabeparameters, der dem Satz von CSI-RS-Ressourcen entspricht, verwendet werden, wobei jeweilige CSI-RS-Ressourcen des Satzes quasi die gleiche Position in Bezug auf einen ersten Parameter der quasi gleichen Position, QCL, aufweisen, der erste Angabeparameter dafür konfiguriert ist, eine Auslastung des Satzes von CSI-RS-Ressourcen anzugeben, die Auslastung CSI-RS zum Nachverfolgen angibt und der erste Angabeparameter ein Parameter "Nachverfolgungsreferenzsignal-Info, TRS-Info", ist.

5. Vorrichtung nach Anspruch 4, wobei der erste QCL-Parameter ein räumlicher QCL-Parameter ist.

6. Vorrichtung nach einem der Ansprüche 4 bis 5,
wobei erste Referenzsignale, die durch QCL-Informationen angegeben werden, die jeweiligen CSI-RS-Ressourcen des Satzes entsprechen, quasi die gleiche Position in Bezug auf den ersten QCL-Parameter aufweisen, wobei die ersten Referenzsignale Referenzsignale sind, die dem ersten QCL-Parameter entsprechen, und/oder
QCL-Informationen, die jeder Ressource des Satzes von CSI-RS-Ressourcen entsprechen, ein gleiches erstes Referenzsignal angeben, wobei das erste Referenzsignal ein Referenzsignal ist, das dem ersten QCL-Parameter entspricht, und/oder
QCL-Informationen, die jeder Ressource des Satzes von CSI-RS-Ressourcen entsprechen, einem gleichen Zustand des Übertragungskonfigurationsindikators, TCI-Zustand, entsprechen.

7. Vorrichtung zur Informationskonfiguration, wobei die Vorrichtung mit einem Netzwerkgerät assoziiert ist und Folgendes umfasst:
eine Übertragungseinheit (401), die dafür konfiguriert ist, erste Konfigurationsinformationen zu einem Endgerät (100) zu übertragen, **dadurch gekennzeichnet, dass** die ersten Konfigurationsinformationen zum Konfigurieren eines Satzes von Kanalzustandsinformation-Referenzsignal-, CSI-RS-, Ressourcen und zum Konfigurieren eines ersten Angabeparameters, der dem Satz von CSI-RS-Ressourcen entspricht, verwendet werden, wobei jeweilige CSI-RS-Ressourcen des Satzes quasi die gleiche Position in Bezug auf einen ersten Parameter der quasi gleichen Position, QCL, aufweisen, der erste Angabeparameter dafür konfiguriert ist, eine Auslastung des Satzes von CSI-RS-Ressourcen anzugeben, die Auslastung CSI-RS zum Nachverfolgen angibt und der erste Angabeparameter ein Parameter "Nachverfolgungsreferenzsignal-Info, TRS-Info", ist.

8. Vorrichtung nach Anspruch 7, wobei der erste QCL-Parameter ein räumlicher QCL-Parameter ist.

9. Verfahren nach einem der Ansprüche 7 bis 8,
wobei erste Referenzsignale, die durch QCL-Informationen angegeben werden, die jeweiligen CSI-RS-Ressourcen des Satzes entsprechen, quasi die gleiche Position in Bezug auf den ersten QCL-Parameter, aufweisen, wobei die ersten Referenzsignale Referenzsignale sind, die dem ersten QCL-Parameter entsprechen, und/oder
QCL-Informationen, die jeder Ressource des Satzes von CSI-RS-Ressourcen entsprechen, ein gleiches erstes Referenzsignal angeben, wobei das erste Referenzsignal ein Referenzsignal ist, das dem ersten QCL-Parameter entspricht, und/oder
QCL-Informationen, die jeder Ressource des Satzes von CSI-RS-Ressourcen entsprechen, einem gleichen Zustand des Übertragungskonfigurationsindikators, TCI-Zustand, entsprechen.

10. Verfahren zur Informationskonfiguration, umfassend:
Übertragen erster Konfigurationsinformationen durch ein Netzwerkgerät zu einem Endgerät, **dadurch gekennzeichnet, dass** die ersten Konfigurationsinformationen zum Konfigurieren eines Satzes von Kanalzustandsinformation-Referenzsignal-, CSI-RS-, Ressourcen und zum Konfigurieren eines ersten Angabeparameters, der dem Satz von CSI-RS-Ressourcen entspricht, verwendet werden, wobei jeweilige CSI-RS-Ressourcen des Satzes quasi die gleiche Position in Bezug auf einen ersten Parameter der quasi gleichen Position, QCL, aufweisen, der erste Angabeparameter dafür konfiguriert ist, eine Auslastung des Satzes von CSI-RS-Ressourcen anzugeben, die Auslastung CSI-RS zum Nachverfolgen angibt und der erste Angabeparameter ein Parameter "Nachverfolgungsreferenzsignal-Info, TRS-Info", ist.

11. Verfahren nach Anspruch 10, wobei der erste QCL-Parameter ein räumlicher QCL-Parameter ist.

12. Verfahren nach einem der Ansprüche 10 bis 11,
wobei erste Referenzsignale, die durch QCL-Informationen angegeben werden, die jeweiligen CSI-RS-Ressourcen des Satzes entsprechen, quasi die gleiche Position in Bezug auf den ersten QCL-Parameter aufweisen, wobei die ersten Referenzsignale Referenzsignale sind, die dem ersten QCL-Parameter entsprechen, und/oder
QCL-Informationen, die jeder Ressource des Satzes von CSI-RS-Ressourcen entsprechen, ein gleiches erstes Referenzsignal angeben, wobei das erste Referenzsignal ein Referenzsignal ist, das dem ersten QCL-Parameter entspricht, und/oder
QCL-Informationen, die jeder Ressource des Satzes von CSI-RS-Ressourcen entsprechen, einem gleichen Zustand des Übertragungskonfigurationsindikators, TCI-Zustand, entsprechen.

## Revendications

1. Procédé de détermination d'informations, comprenant :
la réception (101), par un dispositif terminal, de premières informations de configuration depuis un dispositif de réseau, **caractérisé en ce que** les premières informations de configuration sont utilisées pour configurer un ensemble de ressources de signal de référence d'informations d'état de canal, CSI-RS, et configurer un premier paramètre d'indication correspondant à l'ensemble de ressources CSI-RS, dans lequel les ressources CSI-RS respectives de l'ensemble sont quasi colocalisées par rapport à un premier paramètre de quasi colocalisation, QCL, le premier paramètre d'indication est configuré pour indiquer un usage de l'ensemble de ressources CSI-RS, l'usage indique le CSI-RS pour le suivi, et le premier paramètre d'indication est un paramètre d'information de signal de référence de suivi, TRS-Info.

2. Procédé selon la revendication 1, dans lequel le premier paramètre QCL est un paramètre QCL spatial.

3. Procédé selon l'une quelconque des revendications 1 à 2,
dans lequel des premiers signaux de référence indiqués par les informations QCL correspondant aux ressources CSI-RS respectives de l'ensemble sont quasi colocalisés par rapport au premier paramètre QCL, les premiers signaux de référence étant des signaux de référence correspondant au premier paramètre QCL ; et/ou
les informations QCL correspondant à chaque ressource de l'ensemble de ressources CSI-RS indiquent un premier signal de référence identique, le premier signal de référence étant un signal de référence correspondant au premier paramètre QCL ; et/ou
les informations QCL correspondant à chaque ressource de l'ensemble de ressources CSI-RS correspondent à un état d'indicateur de configuration de transmission, état-TCI, identique.

4. Appareil de détermination d'informations, l'appareil étant associé à un dispositif terminal et comprenant :
une unité de réception (301), configurée pour recevoir des premières informations de configuration depuis un dispositif de réseau (100), **caractérisé en ce que** les premières informations de configuration sont utilisées pour configurer un ensemble de ressources de signal de référence d'informations d'état de canal, CSI-RS et configurer un premier paramètre d'indication correspondant à l'ensemble de ressources CSI-RS, dans lequel les ressources CSI-RS respectives de l'ensemble sont quasi colocalisées par rapport à un premier paramètre de quasi colocalisation, QCL, le premier paramètre d'indication est configuré pour indiquer un usage de l'ensemble de ressources CSI-RS, l'usage indique le CSI-RS pour le suivi, et le premier paramètre d'indication est un paramètre d'information de signal de référence de suivi, TRS-Info.

5. Appareil selon la revendication 4, dans lequel le premier paramètre QCL est un paramètre QCL spatial.

6. Appareil selon l'une quelconque des revendications 4 à 5,
dans lequel des premiers signaux de référence indiqués par les informations QCL correspondant aux ressources CSI-RS respectives de l'ensemble sont quasi colocalisés par rapport au premier paramètre QCL, les premiers signaux de référence étant des signaux de référence correspondant au premier paramètre QCL ; et/ou
les informations QCL correspondant à chaque ressource de l'ensemble de ressources CSI-RS indiquent un premier signal de référence identique, le premier signal de référence étant un signal de référence correspondant au premier paramètre QCL ; et/ou
les informations QCL correspondant à chaque ressource de l'ensemble de ressources CSI-RS correspondent à un état d'indicateur de configuration de transmission, état-TCI, identique.

7. Appareil de configuration d'informations, l'appareil étant associé à un dispositif de réseau et comprenant :
une unité de transmission (401), configurée pour transmettre des premières informations de configuration à un dispositif terminal (100), **caractérisé en ce que** les premières informations de configuration sont utilisées pour configurer un ensemble de ressources de signal de référence d'informations d'état de canal, CSI-RS et configurer un premier paramètre d'indication correspondant à l'ensemble de ressources CSI-RS, dans lequel les ressources CSI-RS respectives de l'ensemble sont quasi colocalisées par rapport à un premier paramètre de quasi colocalisation, QCL, le premier paramètre d'indication est configuré pour indiquer un usage de l'ensemble de ressources CSI-RS, l'usage indique le CSI-RS pour le suivi, et le premier paramètre d'indication est un paramètre d'information de signal de référence de suivi, TRS-Info.

8. Appareil selon la revendication 7, dans lequel le premier paramètre QCL est un paramètre QCL spatial.

9. Appareil selon l'une quelconque des revendications 7 à 8,
dans lequel des premiers signaux de référence indiqués par les informations QCL correspondant aux ressources CSI-RS respectives de l'ensemble sont quasi colocalisés par rapport au premier paramètre QCL, les premiers signaux de référence étant des signaux de référence correspondant au premier paramètre QCL ; et/ou
les informations QCL correspondant à chaque ressource de l'ensemble de ressources CSI-RS indiquent un premier signal de référence identique, le premier signal de référence étant un signal de référence correspondant au premier paramètre QCL ; et/ou
les informations QCL correspondant à chaque ressource de l'ensemble de ressources CSI-RS correspondent à un état d'indicateur de configuration de transmission, état-TCI, identique.

10. Procédé de configuration d'informations, comprenant :
la transmission, par un dispositif de réseau, de premières informations de configuration à un dispositif terminal, **caractérisé en ce que** les premières informations de configuration sont utilisées pour configurer un ensemble de ressources de signal de référence d'informations d'état de canal, CSI-RS et configurer un premier paramètre d'indication correspondant à l'ensemble de ressources CSI-RS, dans lequel les ressources CSI-RS respectives de l'ensemble sont quasi colocalisées par rapport à un premier paramètre de quasi colocalisation, QCL, le premier paramètre d'indication est configuré pour indiquer un usage de l'ensemble de ressources CSI-RS, l'usage indique le CSI-RS pour le suivi, et le premier paramètre d'indication est un paramètre d'information de signal de référence de suivi, TRS-Info.

11. Procédé selon la revendication 10, dans lequel le premier paramètre QCL est un paramètre QCL spatial.

12. Procédé selon l'une quelconque des revendications 10 à 11,
dans lequel des premiers signaux de référence indiqués par les informations QCL correspondant aux ressources CSI-RS respectives de l'ensemble sont quasi colocalisés par rapport au premier paramètre QCL, les premiers signaux de référence étant des signaux de référence correspondant au premier paramètre QCL ; et/ou
les informations QCL correspondant à chaque ressource de l'ensemble de ressources CSI-RS indiquent un premier signal de référence identique, le premier signal de référence étant un signal de référence correspondant au premier paramètre QCL ; et/ou
les informations QCL correspondant à chaque ressource de l'ensemble de ressources CSI-RS correspondent à un état d'indicateur de configuration de transmission, état-TCI, identique.
